# EUROPEAN PATENT APPLICATION

(11) **EP 2 216 923 A1**
(43) Date of publication of application: **11.08.2010**
(21) Application number: 08853870.7
(22) Date of filing: 26.11.2008
(51) Int. Cl.: H04J 11/00, H04W 52/02, H04W 72/04

(54) **RADIO SIGNAL TRANSMISSION DEVICE, RADIO SIGNAL TRANSMISSION METHOD, RADIO SIGNAL RECEPTION DEVICE, RADIO SIGNAL RECEPTION METHOD, AND RADIO SIGNAL RECEPTION PROGRAM**

(30) Priority: 27.11.2007 JP 2007306118
(71) Applicant: NEC Corporation, Tokyo 108-8001 (JP)
(72) Inventor: SHIMOBAYASHI, Shinya, Tokyo 108-8001 (JP)
(74) Representative: Glawe, Delfs, Moll
(86) International application number: PCT/JP2008/071417
(87) International publication number: WO 2009/069638

(57) **Abstract**

To provide a radio signal reception device which can reduce a process delay and reduce a buffering capacity and a power consumption. Specifically, the radio signal reception device includes: a demapping unit which extracts a sub frame from a received radio signal, judges whether a first OFDM symbol existing at the head of the sub frame and forming a control channel contains information on a signal destined to a reception device contained in a data channel, and if yes, outputs a plurality of OFDM symbols; and a decoding unit which decodes the OFDM symbols which has been outputted from the demapping unit. If the first OFDM symbol contains no information on the signal destined to the reception device, the demapping unit terminates the sub frame reception processing.

## Description

### TECHNICAL FIELD

The present invention relates to an arrangement of orthogonal frequency division multiplex (OFDM) symbols and, more particularly, to an arrangement of a control channel of the OFDM symbols.

### BACKGROUND ART

Currently, a so-called third generation (3G) communication system has become a main stream for the mobile phone in Japan; and now, an establishment of standards for the a fourth generation (4G), which makes it possible to communicate in higher speed, is fully in progress. An international group 3GPP (third generation partnership project), handling a standardization of standards relating to W-CDMA (registered trade mark), is promoting a standardization of so called 3G LTE (long term evolution: hereinafter simply called LTE) standard.

The LTE is a technology based on OFDM (orthogonal frequency division multiplex) scheme and MIMO (multiple input multiple output) scheme, and is expected to achieve a communication speed at 100 Mbps or higher.

For example, following technologies are disclosed as communication technologies relating to the OFDM scheme. Patent Document 1 discloses a reception device which extracts only a part of a signal to input it for judging whether to continue the processing or not depending on whether the inputted signal can be processed independently. Patent Document 2 discloses a communication device which reduces the number of pilot symbols allocated to a frame by enabling allocation of pilot symbols to the other frame.

Patent Document 3 discloses a frequency hopping method for mapping subcarrier arrangement and the position of the pilot by using spare bit in the header prior to data transmission. Patent Document 4 discloses a reception device which searches other receiving station during the guard interval period within the OFDM symbol period. Patent Document 5 discloses a signal forming method for changing the arrangement of the pilot symbol according to moving speed of the user or the like.

Patent Document 1: Japanese Unexamined Patent Publication 2004-242190
Patent Document 2: Japanese Unexamined Patent Publication 2007-134804
Patent Document 3: Japanese Unexamined Patent Publication 2007-174679
Patent Document 4: Japanese Patent Number 3798654
Patent Document 5: Japanese Unexamined Patent Publication 2006-510315

### DISCLOSURE OF THE INVENTION

### PROBLEMS TO BE SOLVED BY THE INVENTION

With the LTE, a single sub frame is composed of 14 OFDM symbols. The control channel is mapped into up to three leading OFDM symbols among them. The control channel stores such as allocating position of a data channel and information for decoding, and demodulation and decoding of the data channel can be started only after the control channel is decoded.

With this system, however, the data channel to be demodulated is not determined until the control channel is decoded. Accordingly, if it takes a time to decode the control channel, buffering of the data channel becomes necessary. In the LTE, reception of a data channel requires a bandwidth of 20 MHz at a maximum, and it requires buffering of a large amount of data. As a result, a process delay is generated, and power is consumed wastefully.

For comparison, in Patent Document 1, only a part of a signal is extracted to be inputted, and whether to continue the processing is judged depending on whether the inputted signal can be processed independently. However, even though only a part of a signal, it needs to include both the control channel and the data channel as being a unit "possible to be processed independently", and this Document 1 does not solve such a problem that a large amount of buffering is required. Similarly, Patent Documents 2 to 5 do not provide a configuration for solving above described problem.

An object of the present invention is to provide a radio signal transmission device, a radio signal transmission method, a radio signal reception device, a radio signal reception method, and a radio signal reception program which can reduce a delay in a receiving process and reduce a buffering capacity and a power consumption.

### MEANS FOR SOLVING THE PROBLEMS

In order to achieve the object, a radio signal transmission device according to the present invention is the radio signal transmission device for transmitting information by using an orthogonal frequency division multiplex modulating scheme, and the device includes a mapping unit which maps a control information block including information on a mapping position of a data channel destined to own station contained in a data channel to a first OFDM symbol of a control channel in a frame composed of the control channel and the data channel.

A radio signal transmission method according to the present invention is the radio signal transmission method for transmitting information by using an orthogonal frequency division multiplex modulating scheme, and the method includes mapping a control information block including information on a mapping position of a data channel destined to own station contained in a data channel to a first OFDM symbol of a control channel in a frame composed of the control channel and the data channel.

In order to achieve the above described object, a radio signal reception device according to the present invention is a reception device for receiving a radio signal including each sub frame composed of a plurality of OFDM symbols, in which one or more OFDM symbols form a control channel and other OFDM symbols not forming the control channel form a data channel. The radio signal reception device includes: a demapping unit which extracts the sub frame from a received radio signal, judges whether a first OFDM symbol existing at the head of the sub frame and forming the control channel contains information on a signal destined to the reception device contained in the data channel, and if the first OFDM symbol contains the information on the signal destined to the reception device, outputs the plurality of OFDM symbols; and a decoding unit which decodes the plurality of OFDM symbols outputted from the demapping unit. If the first OFDM symbol contains no information on the signal destined to the reception device, the demapping unit terminates the sub frame reception processing.

In order to achieve the above described object, a radio signal reception method according to the present invention is a reception method for receiving a radio signal including a sub frame composed of a plurality of OFDM symbols, in which one or more OFDM symbols form a control channel and other OFDM symbols not forming the control channel form a data channel. The radio signal reception method includes: a sub frame extracting step of extracting the sub frame from a received radio signal; a first OFDM symbol judging step of judging whether a first OFDM symbol existing at the head of the sub frame and forming the control channel contains information on a signal destined to the reception device contained in the data channel; a decoding step of decoding the plurality of OFDM symbols if the first OFDM symbol contains the information on the signal destined to the reception device; and a processing termination step of terminating the sub frame reception processing if the first OFDM symbol contains no information on the signal destined to the reception device.

In order to achieve the above described object, a radio signal reception program according to the present invention is a program causing a computer, which is provided in a reception device for receiving a radio signal including a sub frame composed of a plurality of OFDM symbols in which one or more OFDM symbols form a control channel and other OFDM symbols not forming the control channel form a data channel, to execute processes of: extracting the sub frame from a received radio signal; judging whether a first OFDM symbol existing at the head of the sub frame and forming the control channel contains information on a signal destined to a reception device contained in the data channel; decoding the plurality of OFDM symbols if the first OFDM symbol contains the information on the signal destined to the reception device; and terminating the sub frame reception processing if the first OFDM symbol contains no information on the signal destined to the reception device.

### EFFECTS OF THE INVENTION

As described above, since the present invention is configured to terminate the sub frame reception processing if the first OFDM symbol contains no information on the signal destined to the reception device, unnecessary OFDM symbol reception and buffering processing can be terminated in the middle. With this, a process delay can be suppressed, and required buffering capacity and power consumption can be reduced.

### BEST MODES FOR CARRYING OUT THE INVENTION

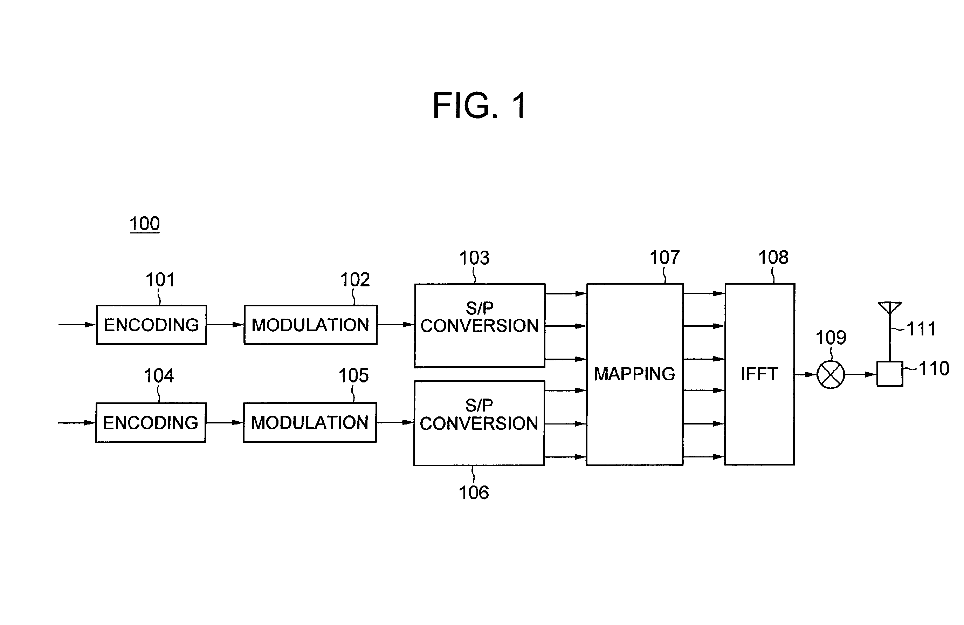

Fig. 1 is a block diagram showing a configuration of a transmitter 100 according to an exemplary embodiment of the invention. The transmitter 100 is a radio signal transmission device for transmitting information by using an orthogonal frequency division multiplex modulating system. The transmitter 100 includes, as a basic configuration, a mapper 107 which maps a control information block including information on a mapping position of a data channel destined to own station contained in a data channel to a first OFDM symbol of a control channel in a frame composed of the control channel and the data channel.

Also, the transmitter 100 includes encoders 101 and 104, modulators 102 and 105, serial-to-parallel converters (S/P converters) 103 and 106, an inverse fast Fourier transformer (IFFT unit) 108, digital-to-analog converter (D/A converter) 109, RF modulator 110, and a transmission antenna 111.

The encoder 101 performs such processing as turbo coding and convolution coding to an input signal, and outputs the signal to the modulator 102. The modulator 102 modulates the signal inputted from the encoder 101 by using the known scheme such as QPSK, 16QAM, or 64QAM, and outputs the signal to the S/P converter 103. The S/P converter 103 parallelizes the modulated signal data inputted from the modulator 102, and outputs the data to the mapper 107.

The functions and connecting relations of the encoder 104, the modulator 105, and S/P converter 106 are the same as those of the encoder 101, the modulator 102, and S/P converter 103, so the explanation thereof is omitted. The data destined to one terminal is encoded at the encoder 101, modulated at the modulator 102, and serial-to-parallel converted at the S/P converter 103. At the same time, the data destined to the other terminal is encoded at the encoder 104, modulated at the modulator 105, and serial-to-parallel converted at the S/P converter 106.

As described above, the transmitter 100 can involve signals destined to a plurality of terminals in a single sub frame. FIG. 1 illustrates two lines of systems through which the input signals flow to the serial-to-parallel converters. However, it illustrates the data destined to two terminals only for simplicity of drawing, and those are not limited to be destined to two terminals actually. Not only one signal destined to one terminal, but also three or more signals destined to three or more terminals, can also be included.

The mapper 107 arranges the serial-to-parallel converted signal data outputted from the S/P converters 103 and 106 according to allocation areas, and outputs the data to the IFFT unit 108. The IFFT unit 108 performs an inverse fast Fourier transform to the mapped data outputted from the mapper 107, and outputs the data to the D/A converter 109.

The D/A converter 109 performs a D/A conversion to the inverse fast Fourier transformed signal data outputted from the IFFT unit 108, and outputs the data as a baseband signal to the RF modulator 110. The RF modulator 110 modulates the transmission frequency by the baseband signal outputted from the D/A converter 109, and outputs the signal to the transmission antenna 111 as a radio signal to be transmitted finally

The position where each piece of the serial-to-parallel converted data is mapped is determined by a scheduler (not shown) of a base station, and the each piece of data is mapped to the corresponding place by the mapper 107. The mapped data is inverse fast Fourier transformed by the IFFT unit 108, carried on a carrier by the D/A converter 109 and the RF modulator 110, and transmitted by the transmission antenna 111.

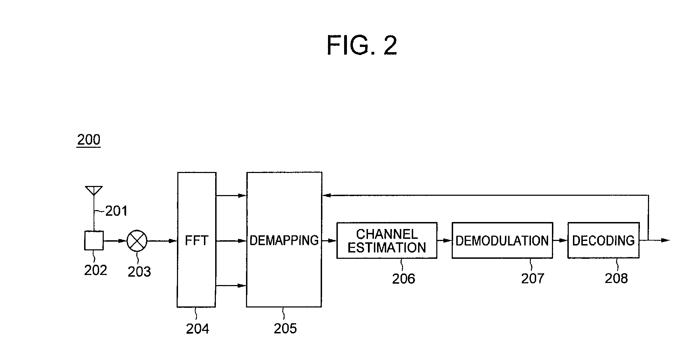

FIG. 2 is a block diagram showing a configuration of a receiver 200 according to the exemplary embodiment of the invention. The receiver 200 includes a reception antenna 201, a wave detector 202, an analog-to-digital converter (A/D converter) 203, a fast Fourier transformer (FFT unit) 204, a demapper 205, a channel estimator 206, a demodulator 207, and a decoder 208.

The wave detector 202 detects the radio signal received by the reception antenna 201 to extract a base band signal, and outputs the baseband signal to the A/D converter 203. The A/D converter 203 A/D converts the baseband signal outputted from the wave detector 202, and outputs the signal to the FFT unit 204. The FFT unit 204 performs fast Fourier transform to the A/D converted signal outputted from the A/D converter 203, and outputs the signal to the demapper 205.

The demapper 205 specifies an area to which the data distained to the own terminal is mapped with respect to the Fourier transformed signal outputted from the FFT unit 204 based on allocating information notified by the control information in the received signal, performs processing to fetch an OFDM symbol, and outputs the OFDM symbol to the channel estimator 206. At this time, the OFDM symbol fetched by the demapper 205 is composed of the control channel and the data channel, as described later. The demapper 205 outputs, firstly, the data of the control channel to the channel estimator 206.

The channel estimator 206 performs channel estimation about the data of the control channel outputted from the demapper 205 by using a pilot signal in the received signal, and outputs the data to the demodulator 207. The processing of the channel estimation performed by the channel estimator 206 will be described later.

The demodulator 207 demodulates the data outputted from the channel estimator 206 based on demodulation mode information notified by the control information in the received signal, and outputs the data to the decoder 208. The decoder 208 decodes the data outputted from the demodulator 207 based on transport block size information notified by the control information in the received signal similarly.

The data of the control channel decoded by the decoder 208 is returned to the demapper 205. At this time, the demapper 205 demaps the data channel destined to the own terminal based on the decoded data of the control channel, and outputs the fetched data of the data channel to the channel estimator 206. After this, the processing which has been performed to the data of the control channel is similarly performed to the data of the data channel; that is, the data is processed and outputted similarly by the channel estimator 206, demodulator 207, and the decoder 208.

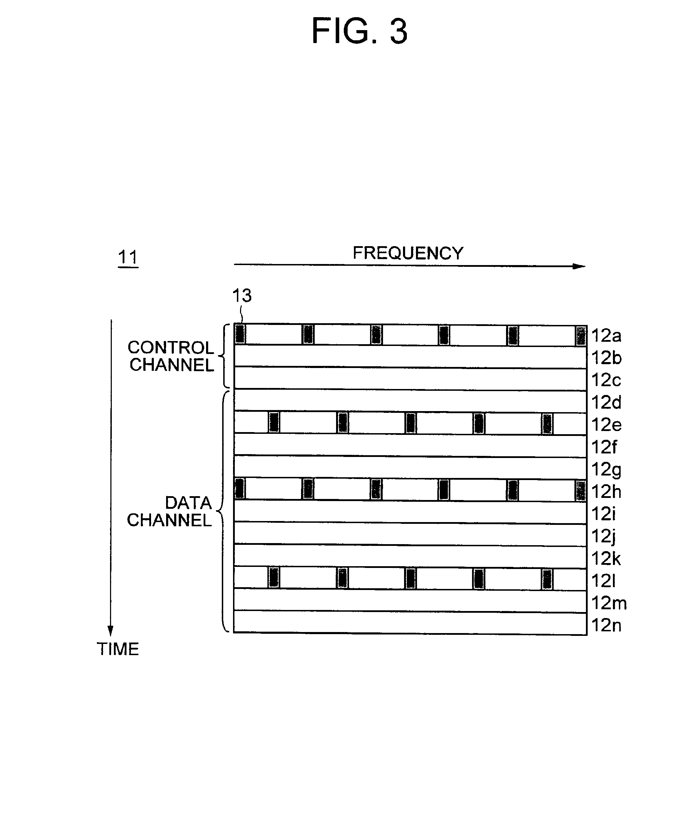

FIG. 3 is a conceptual diagram showing an example of a configuration of a down frame 11 transmitted from the transmitter 100 shown in FIG. 1 and received by the receiver 200 shown in FIG. 2. A sub frame of the down frame 11 is composed of 14 OFDM symbols 12a to 12n. Leading three OFDM symbols 12a to 12c form the control channel, and remaining 11 OFDM symbols 12d to 12n form the data channel. Pilot signals 13 are inserted in the first, fifth, eighth, and twelfth OFDM symbols 12a, 12e, 12h, and 121, in the frequency axis direction, at regular intervals. Hereinafter, the OFDM symbol 12a arranged at first position is called first OFDM symbol 12a, the OFDM symbol 12b arranged at second position is called second OFDM symbol 12b, and so on.

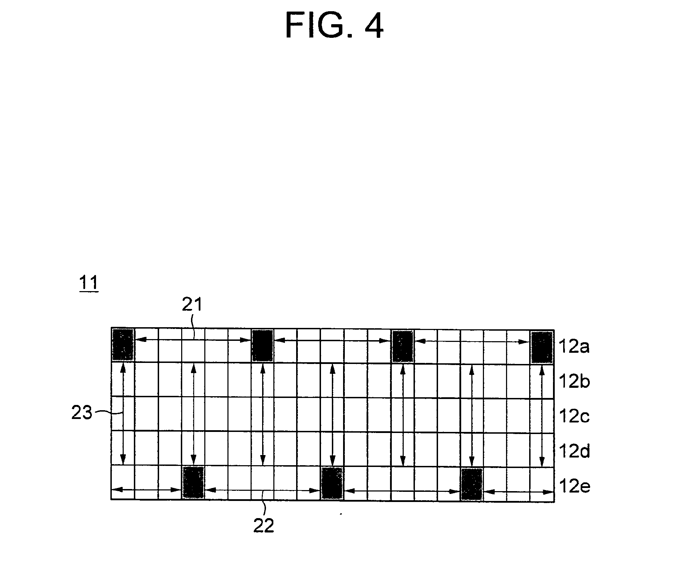

FIG. 4 is a conceptual diagram showing an example of interpolation processing at the channel estimation of the OFDM symbols 12a to 12n shown in FIG. 3 performed by the channel estimator 206 shown in FIG. 2. First, the channel estimator 206 calculates a channel estimation value based on each pilot signal 13 contained in the first OFDM symbol 12a upon receiving the first OFDM symbol 12a, and performs a linear interpolation in the frequency axis direction 21. Sequentially, the channel estimator 206 calculates a channel estimation value for each pilot signal 13 as is in the case of the first OFDM symbol 12a upon receiving the fifth OFDM symbol 12e in which next pilot signal 13 is being inserted, and performs a linear interpolation in the frequency axis direction 22.

Next, the channel estimator 206 performs linear interpolation in the time axis direction 23 by using the channel estimation value calculated from the first OFDM symbol 12a and the channel estimation value calculated from the fifth OFDM symbol 12e, and calculates each channel estimation value of the second to fourth OFDM symbols 12b to 12d in which the pilot signal is not being inserted. Since the specific method of interpolation processing has been widely known already, it is not mentioned here in detail.

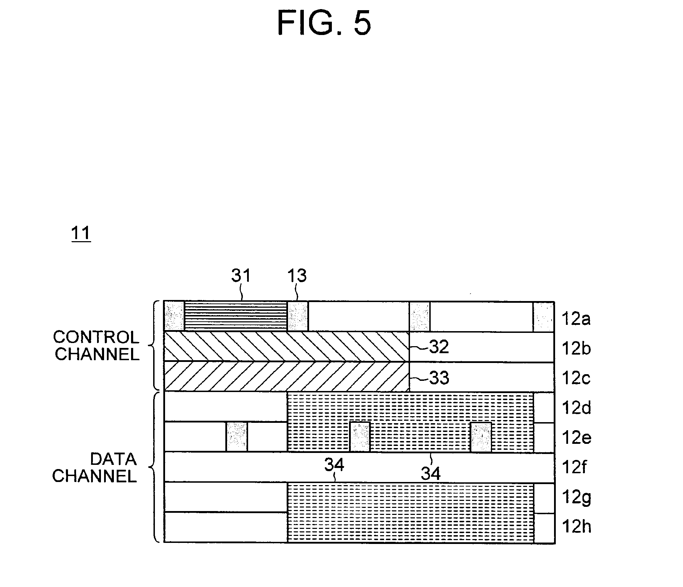

FIG. 5 is a conceptual diagram showing a mapping position of each information element for the first to third OFDM symbols 12a to 12c forming the control channel disclosed in FIG. 3. A control information block 31 is mapped in the first OFDM symbol 12a. The control information block 31 contains information on the mapping position of the data channel 34 destined to the own terminal, included in the fourth and the sequential OFDM symbols 12d to 12n forming the data channel. The control information block 31 can be decoded alone. Also, it is scrambled by a unique terminal ID, and only the terminal having a corresponding terminal ID can decode it normally.

A control information block 32 is mapped to the second OFDM symbol 12b. The control information block 32 stores control information (demodulation mode, transport block size, and HARQ process number) required to decode the data channel of DL (down link) which is not stored in the control information block 31 described above. A control information block 33 is mapped to the third OFDM symbol 12c. It contains control information (transmission data channel area allocating information, demodulation mode, and transport block size) for UL (up link) transmission.

The transmitter 100 arranges the control information block 31 which is to be mapped to the first OFDM symbol 12a so as to contain at least information about the mapping position of the data channel 34 destined to the own terminal, when notifying the receiver 200 of the presence of the data by using the control channel. The information about the modulation mode required to demodulate and decode the other data channel, the transport block size, and the like, is arranged so as to be contained in the second and third OFDM symbols 12b and 12c.

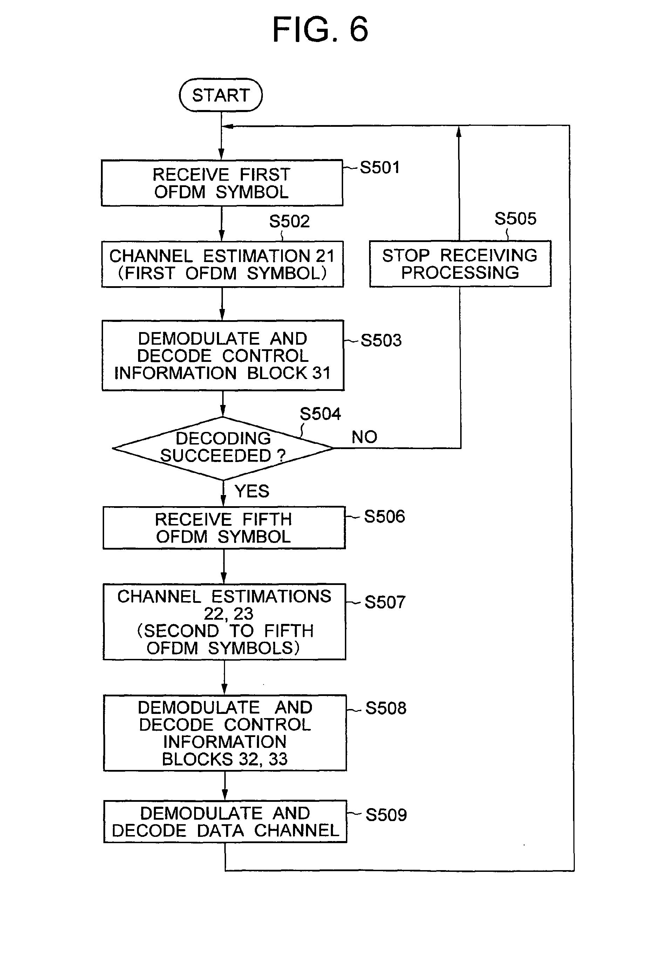

FIG. 6 is a flowchart showing processing performed at the time of receiving the OFDM symbols 12a to 12n by the receiver 200 shown in FIG. 2. When the processing starts, the receiver 200 which has received the first OFDM symbol 12a containing the control information block 31 (step S501) performs the linear interpolation in the frequency axis direction 21 shown in FIG. 4 based on the pilot signal 13 by the channel estimator 206, and obtains the channel estimation value for each subcarrier signal (step S502).

The receiver 200 demodulates and decodes the control information block 31 by the demodulator 207 and the decoder 208 based on the obtained channel estimation value (step S503). Here, the data channel allocation information is scrambled by UE ID so as to be decoded normally by only a corresponding terminal. Therefore, it is judged whether the control information block 31 is demodulated and decoded successfully (step S504).

When the decoding is failed (step S504: NO), it can be determined that there is no data channel allocated to the receiver 200. Then, the receiving processing is stopped (step S505), the proceeding returns to step S501, and the receiver 200 waits for the timing of receiving the next control information.

When the decoding is succeeded (step S504: YES), it can be determined that there are data channels allocated to the own terminal. Then, the reception of the control information of the second and third OFDM symbols 12b and 12c and reception of the data channels of the fourth OFDM symbols 12d and subsequent symbols are continued.

At a stage where the fifth OFDM symbol 12e to which the pilot signal 13 is mapped is received (step S506), the linear interpolation in the frequency axis direction 22 and the linear interpolation in the time axis direction 23 shown in FIG. 4 are performed by the channel estimator 206 based on the pilot signal 13 of the fifth OFDM symbol 12e, and the channel estimation values for the second to fifth OFDM symbols 12b to 12e are obtained (step S507).

The terminal performs channel equalization, demodulation, and decoding of the control information blocks 32 and 33 by the demodulator 207 and the decoder 208 based on the calculated channel estimation value, to obtain remaining information required to demodulate and decode the data channel (step S508). Then, the terminal demodulates and decodes the data channel mapped to the mapping position which is acquired by decoding the control information block 31, within the OFDM symbols 12d to 12n forming the data channel (step S509). Thereafter, the procedure returns to step S501 and repeats the processing described above.

It is noted that each step described in the flowchart shown in FIG. 6 may be configured to be executed as a program operated on a computer provided to the receiver 200.

The traditional arts such as Patent Document 1 described above need to buffer both of the control channel and the data channel, and decode the control channel before demodulating the data channel. As a result, a process delay is generated, and a large buffering capacity and power consumption are required.

On the other hand, in the exemplary embodiment of the invention, the data channel allocating information is mapped to the first OFDM symbol 12a at the head of the sub frame. Therefore, only the first OFDM symbol 12a is decoded, first. Based on the result, whether the data channel is allocated to the receiver 200 or not is judged, and if not, terminating the reception following the second OFDM symbol 12b. Accordingly, unnecessary OFDM symbol reception and buffering processing can be terminated in the middle. With this, a process delay can be suppressed, and a buffering capacity and a power consumption can be reduced.

It is noted that the exemplary embodiment of this invention is described as relating to such a data format that "one sub frame is composed of 14 OFDM symbols, and the control channel is mapped into up to three leading OFDM symbols"; however, the data format of the sub frame to which the present invention can be applied is not limited to such a case. The control channel may be mapped to one or two OFDM symbols, or may be mapped to four or more OFDM symbols, as long as information on data channel allocation is mapped to the first OFDM symbol as described above. Needless to say, the present invention can be applied to a communication system employing OFDM scheme, as well as LTE.

Also, the exemplary embodiment is configured such that the information on mapping position of the data channel is included in the control information block 31; however, it is also possible to configure such that only the information about whether the data channel is allocated is included in the control information block 31.

While the present invention has been described by referring to the specific exemplary embodiment (and example), the present invention is not limited only to such exemplary embodiment (and example). It will be understood by those of ordinary skill in the art that various changes in form and details may be made therein without departing from the spirit and scope of the present invention as defined by the claims.

This application is based upon and claims the benefit of priority from Japanese patent application No. 2007-306118, filed on November 27, 2007, the disclosure of which is incorporated herein in its entirety by reference.

### INDUSTRIAL APPLICABILITY

The present invention can be applied to the communication device to which OFDM scheme is applied.

### BRIEF DESCRIPTION OF THE DRAWINGS

FIG. 1 is a block diagram showing a configuration of a transmitter according to an exemplary embodiment of the invention.
FIG. 2 is a block diagram showing a configuration of a receiver according to an exemplary embodiment of the invention.
FIG. 3 is a conceptual diagram showing an example of a configuration of a down frame transmitted from the transmitter shown in FIG. 1 and received by the receiver shown in FIG. 2.
FIG. 4 is a conceptual diagram showing an example of interpolation processing at the channel estimation for the OFDM symbol in FIG. 3 performed by a channel estimator shown in FIG. 2.
FIG. 5 is a conceptual diagram showing a mapping position of each information element for a first to third OFDM symbols forming the control channel shown in FIG. 3.
FIG. 6 is a flowchart showing the processing performed when receiving the OFDM symbol by the receiver shown in FIG. 2.

### REFERENCE NUMERALS

- 11: Down frame
- 12, 12a-12n: OFDM symbol
- 13: Pilot signal
- 21, 22: Linear interpolation in the frequency axis direction
- 23: Linear interpolation in the time axis direction
- 31, 32, 33: Control information block
- 34: Data channel destined to own terminal
- 100: Transmitter
- 107: Mapper
- 200: Receiver
- 201: Reception antenna
- 202: Wave detector
- 203: Analog-to-digital converter (A/D converter)
- 204: Fast Fourier transformer (FFT unit)
- 205: Demapper
- 206: Channel estimator
- 207: Demodulator
- 208: Decoder

## Claims

1. Radio signal transmission means for transmitting information by using an orthogonal frequency division multiplex modulating scheme, comprising mapping means for mapping a control information block including information on a mapping position of a data channel destined to own station contained in a data channel to a first OFDM symbol of a control channel in a frame composed of the control channel and the data channel.

2. A radio signal transmission method for transmitting information by using an orthogonal frequency division multiplex modulating scheme, comprising mapping a control information block including information on a mapping position of a data channel destined to own station contained in the data channel to a first OFDM symbol of a control channel in a frame composed of the control channel and the data channel.

3. Radio signal reception means for receiving a radio signal including each sub frame composed of a plurality of OFDM symbols, in which one or more OFDM symbols form a control channel and other OFDM symbols not forming the control channel form a data channel, the reception device comprising:
demapping means for extracting the sub frame from a received radio signal, judging whether a first OFDM symbol existing at the head of the sub frame and forming the control channel contains information on a signal destined to the reception means contained in the data channel, and if the first OFDM symbol contains the information on the signal destined to the reception means, outputting the plurality of OFDM symbols; and
decoding means for decoding the plurality of OFDM symbols outputted from the demapping means, wherein
the demapping means terminates the sub frame reception processing if the first OFDM symbol contains no information on the signal destined to the reception means.

4. The radio signal reception means as claimed in Claim 3, wherein
the demapping means judges that the information on the signal destined to the reception means is contained in the first OFDM symbol when the first OFDM symbol contains information on a mapping position of data destined to the reception means contained in the data channel.

5. The radio signal reception means as claimed in Claim 4, wherein
the demapping means outputs the first OFDM symbol to the decoding means, and judges that the information on the signal destined to the reception means is contained in the first OFDM symbol when the first OFDM symbol is decoded normally by the decoding means.

6. The radio signal reception means as claimed in Claim 5, wherein
the decoding means decodes the first OFDM symbol according to an identification information unique to the reception means.

7. The radio signal reception means as claimed in Claim 4, further comprising a channel estimating means for performing channel estimation on the OFDM symbol outputted from the demapping means with interpolation processing by using a pilot signal contained in the OFDM symbol, and outputting the channel estimated output signal to the decoding means.

8. A radio signal reception method for receiving a radio signal including a sub frame composed of a plurality of OFDM symbols, in which one or more OFDM symbols form a control channel and other OFDM symbols not forming the control channel form a data channel, the radio signal reception method comprising:
a sub frame extracting step of extracting the sub frame from a received radio signal;
a first OFDM symbol judging step of judging whether a first OFDM symbol existing at the head of the sub frame and forming the control channel contains information on a signal destined to a reception device contained in a data channel;
a decoding step of decoding a plurality of OFDM symbols if the first OFDM symbol contains the information on the signal destined to the reception device; and
a processing termination step of terminating the sub frame reception processing if the first OFDM symbol contains no information on the signal destined to the reception device.

9. The radio signal reception method as claimed in Claim 8, wherein
at the first OFDM symbol judging step, the information on the signal destined to the reception device is judged to be contained in the first OFDM symbol if the first OFDM symbol contains information on a mapping position of data destined to the reception device contained in the data channel.

10. The radio signal reception method as claimed in Claim 9, further comprising:
a first OFDM symbol decoding step of decoding the first OFDM symbol; and
a decoding judgment step of judging that the information on the signal destined to the reception device is contained in the first OFDM symbol if the first OFDM symbol is decoded normally.
